# EUROPEAN PATENT APPLICATION

(11) **EP 0 677 262 A1**
(43) Date of publication of application: **18.10.1995**
(21) Application number: 95302373.6
(22) Date of filing: 10.04.1995
(51) Int. Cl.: A47C 9/10, A47D 13/02, B62B 9/10

(54) **Instrument comprising seat**

(30) Priority: 13.04.1994 JP 74765/94; 04.10.1994 JP 239815/94
(71) Applicant: Aprica Kassai Kabushikikaisha, Osaka-shi, Osaka (JP)
(72) Inventor: Kassai, Kenzou, Osaka-shi, Osaka (JP)
(74) Representative: Abbie, Andrew Kenneth

(57) **Abstract**

A bag portion (9) is provided on a flexible sheet member (3) for receiving a padding member (10) therein, thereby providing the flexible sheet member (3) with rigidity along the flexural direction. A cushion member (14) is stuck on the padding member (10), so that the cushion member (14) can be taken out from the bag portion (9) along with the padding member (10). Thus, it is possible to readily wash the overall seat of a baby carriage or the like which is formed by the flexible sheet member.

## Description

### BACKGROUND OF THE INVENTION

### Field of the Invention

The present invention relates to an instrument, such as a baby carriage, for example, comprising a seat whose surface for receiving the sitter is formed by a flexible sheet member, and more particularly, it relates to an instrument comprising a seat which is charged with a padding member for providing the flexible sheet member with rigidity along the flexural direction.

### Description of the Background Art

In order to lighten a baby carriage or make it collapsible, for example, a surface of its seat for receiving the sitter is generally formed by a flexible sheet member. However, a seat which is formed by only a flexible sheet member tends to extremely deflect and bear on the sitter from both sides. In general, therefore, a padding member is arranged along the flexible sheet member thereby providing rigidity along the flexural direction.

In addition to the aforementioned padding member, further, a cushion member is generally added to such a seat in order to improve its comfortableness. Such a cushion member is generally charged between the flexible sheet member forming the surface for receiving the sitter and the padding member.

On the other hand, some baby carriage of the aforementioned type comprises a seat, more specifically a flexible sheet member, which is detachable from the baby carriage body so that the same can be readily washed. In this case, the padding member is made readily separable from the flexible sheet member, not to hinder the flexible sheet member from washing. For example, the flexible sheet member is provided with a bag portion for receiving the padding member, which in turn is taken out when the flexible sheet member is washed.

It is possible to readily remove the padding member in order to wash the overall flexible sheet member as hereinabove described, while the cushion member must generally be washed with the flexible sheet member as a whole. However, when the cushion member is washed with the flexible member as a whole although only the flexible sheet member is soiled during employment to require washing, a relatively long time is required for drying these members after the washing. Further, it is rather difficult to wash the flexible sheet member, due to the presence of the cushion member.

On the other hand, it may be possible to insert not only the padding member but the cushion member in the bag portion which is provided on the flexible sheet member so that the cushion member can also be taken out from the bag portion. In this case, the flexible sheet member can be readily washed and only a short time is required for drying the same. However, the cushion member is made of a relatively soft material. Once the cushion member is taken out, therefore, it is rather difficult to insert the same in the bag portion again. Further, it is difficult to position the cushion member as taken out in the bag portion again, and hence the same cannot be stabilized in the bag portion.

### SUMMARY OF THE INVENTION

Accordingly, an object of the present invention is to provide an instrument comprising a seat, which can solve the aforementioned various problems.

The present invention is directed to an instrument comprising a seat whose surface for receiving the sitter is formed by a flexible sheet member which is provided with a bag portion receiving a padding member for providing the flexible sheet member with rigidity along the flexural direction. In order to solve the aforementioned technical problems, a cushion member is stuck on the padding member, which is so inserted in the bag portion as to direct the cushion member toward the sitter.

According to the present invention, the cushion member which is stuck on the padding member can be handled with the padding member.

According to the present invention, therefore, it is possible to take out the cushion member from the bag portion along with the padding member, in order to wash the flexible sheet member. Therefore, it is possible to readily wash the overall flexible sheet member, as well as to dry the same in a short time after the washing.

Further, it is possible to readily insert the cushion member in the washed bag portion along with the padding member as compared with a case of independently inserting the cushion member therein. After such insertion, further, the cushion member is positioned by the padding member and hence it is possible to stably maintain the position and the shape of the cushion member in the bag portion.

The seat provided on the instrument according to the present invention may comprise only a seat portion which is formed by the flexible sheet member, or a seat portion and a backrest portion which are formed by the flexible sheet member. In the latter case, the padding member may be arranged on both or only one of the seat and backrest portions. Thus, the present invention is applicable to various types of seats.

Further, the seat may be cross-directionally collapsible. In this case, the padding member is arranged only on a cross-directional central portion of the flexible sheet member, for example, to allow the cross-directional collapse. On the other hand, the padding member may be divided into a plurality of portions which are cross-directionally arranged in parallel with each other, so that the padding member is arranged over the widest possible range along the cross direction of the flexible sheet. Thus, it is possible to arrange the padding member over a wide range along the cross direction of the flexible sheet member, thereby providing rigidity along the flexural direction over such a wide range. In this case, further, the cushion member is preferably stuck on the padding member to integrally connect the plurality of portions thereof with each other. Thus, the following advantages are attained:

When the padding member is merely divided into a plurality of portions as hereinabove described, it is necessary to form a plurality of bag portions for receiving the respective portions of the padding member one by one in the respective bag portions, in order to prevent the plurality of portions of the padding member from displacement. Therefore, the flexible sheet member may be provided with a number of perforations, for example, for forming the plurality of bag portions, while relatively conspicuous steps may be formed on the surface of the flexible sheet member for receiving the sitter. When the plurality of portions of the padding member are integrally connected with each other by the cushion member, on the other hand, the portions of the padding member are prevented from displacement by the cushion member, whereby the bag portion can be so sized as to simultaneously receive the plurality of portions of the padding member. Therefore, it is possible to reduce the number of perforations, for example, so that a step of sewing or working the flexible sheet member can be simplified and the plurality of portions of the padding member can be inserted in or taken out from the bag portion in a single operation. Although the padding member is divided into the plurality of portions, substantially no step is caused on the seat due to the integration with the cushion member.

When the seat is cross-directionally collapsible and comprises a backrest portion which is formed by the flexible sheet member as hereinabove described, the padding member is preferably divided into at least three portions, including a central portion and side portions provided on both sides thereof, which are cross-directionally arranged in parallel with each other. In this case, the cushion member is so stuck as to integrally connect all portions of the padding member with each other. When the padding member as divided is partially defined by the central portion which is located on the cross-directional center, it is possible to position this central portion along the backbone of the sitter, whereby it is possible to reliably prevent the portion which is in contact with the backbone of the sitter from formation of steps resulting from connected portions of the padding member.

The present invention is advantageously applicable to a baby carriage. The seat of such a baby carriage is easily soiled by a baby and must be regularly kept clean in view of sanification, and hence the flexible sheet member which is provided on the seat is relatively frequently washed.

Some baby carriage comprises rod members extending along back surfaces of both side portions of its backrest portion. When the present invention is applied to such a baby carriage, the cushion member preferably extends up to regions covering the rod members. Due to this structure, it is possible to relieve an impact which may be applied to the sitter who collides with either rod member through the backrest portion.

According to the present invention, further, the cushion member which is stuck on the padding member is preferably structured by at least two layers including an inner side layer which is in contact with the padding member and an outer side layer forming an outer surface, so that the inner side layer has a larger elastic coefficient than the outer side layer. Thus, it is possible to effectively absorb a larger impact by the inner side layer of the cushion member while providing the sitter with pleasant feeling by the outer side layer, thereby providing a seat which satisfies both of comfortableness and safety.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a baby carriage 1, as viewed from a back side, as an instrument comprising a seat according to an embodiment of the present invention;
Fig. 2 is a longitudinal sectional view showing a backrest portion 5 of a seat 2 which is provided on the baby carriage 1 appearing in Fig. 1;
Fig. 3 is a perspective view showing a padding member 10 and a cushion member 14 which are employed in another embodiment of the present invention;
Fig. 4 is a top plan view showing the cushion member 14 appearing in Fig. 3 in a bent state;
Fig. 5 is a diagram corresponding to Fig. 3, for illustrating still another embodiment of the present invention;
Fig. 6 is a diagram corresponding to Fig. 4, showing the embodiment appearing in Fig. 5; and
Fig. 7 is a cross sectional view showing a backrest portion 5 according to a further embodiment of the present invention.

### DESCRIPTION OF THE PREFERRED EMBODIMENTS

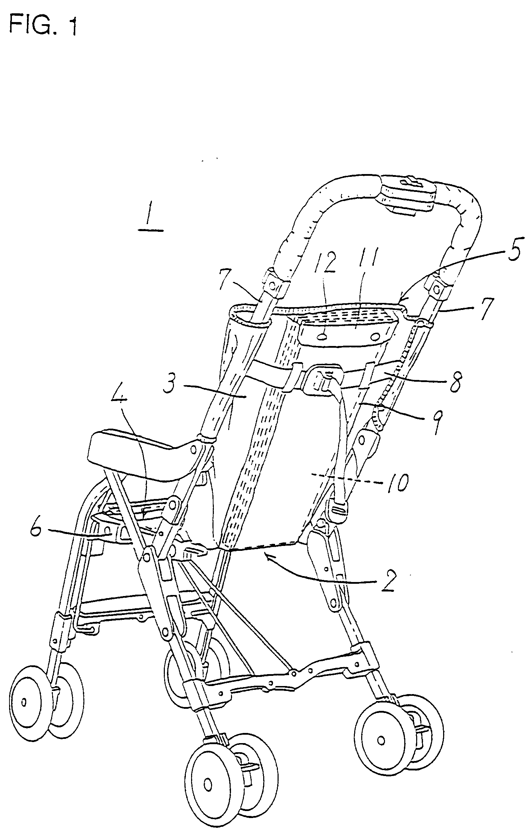

Fig. 1 is a perspective view showing a baby carriage 1, as viewed from the back side, as an instrument comprising a seat according to an embodiment of the present invention. The baby carriage 1 comprises a seat 2 having a seat portion 4 and a backrest portion 5 which are formed by a flexible sheet member 3. The flexible sheet member 3 is made of thick cloth, for example.

Such a seat 2 is rendered detachable from the body part of the baby carriage 1, to facilitate washing of the overall flexible sheet member 3. For example, the seat portion 4 is placed on a seat portion holding member 6 which is provided on the body part of the baby carriage 1, and attached to the seat portion holding member 6 by detachable fixing means such as hooking, binding with cords or the like. On the other hand, both side portions of the backrest portion 5 are wound on a pair of push rods 7 which are provided on the body part of the baby carriage 1 respectively, and attached thereto by detachable fixing means such as hooking, binding with cords or the like, for example, to be maintained in this state.

The backrest portion 5 is preferably rendered inclinable. Thus, the both side portions of the backrest portion 5 are relatively largely loosened so that the backrest portion 5 can be inclined to stretch the loosened both side portions. The angle of such inclination of the backrest portion 5 is adjusted in response to the length of a belt 8 having end portions which are mounted on the push rods 7 respectively.

In the backrest portion 5, the flexible sheet member 3 is provided with a bag portion 9. A padding member 10 is inserted in the bag portion 9 as shown by broken lines in Fig. 1, in order to provide the flexible sheet member 3 with rigidity along the flexural direction. The baby carriage 1 is cross-directionally collapsible to approximate the pair of push rods 7 to each other, whereby the seat 2 is also cross-directionally collapsible. In order to allow such cross-directional collapse, the padding member 10 is arranged only on a cross-directional central portion of the backrest portion 5.

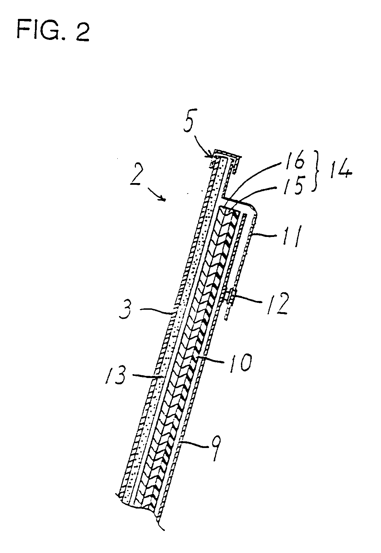

Fig. 2 is a longitudinal sectional view showing the backrest portion 5. Referring to Figs. 1 and 2, an upper opening of the bag portion 9 is preferably closed with a cover 11 which is made of a flexible sheet material, and the closed state is maintained by hooks 12. As shown in Fig. 2, the flexible sheet member 3 forming the seat 2 is preferably entirely lined with a lining member 13 which is made of a cushioning material such as urethane foam, for example.

A cushion member 14 is stuck on the padding member 10, which is inserted in the bag portion 9 as hereinabove described, by an adhesive, for example. The padding member 10 is so inserted in the bag portion 9 as to direct the cushion member 14 toward the sitter.

The aforementioned cushion member 14 is preferably structured by at least two layers including an inner side layer 15 which is in contact with the padding member 10 and an outer side layer 16 forming an outer surface. The materials for these layers are so selected that the inner side layer 15 has a larger elastic coefficient than the outer side layer 16. For example, the inner side layer 15 is made of a polyethylene bead foaming material, polyethylene foam or a urethane chip, while the outer side layer 16 is made of urethane foam or cotton. On the other hand, the padding member 10 is made of resin, while the same can more preferably be advantageously formed by a plastic corrugated board which is lightweight and can provide relatively high rigidity.

When the cushion member 14 is stuck on the padding member 10 as described above, it is possible to handle these members integrally with each other. While the structure including the padding member 10 and the cushion member 14 is employed on the backrest portion 5 in the aforementioned embodiment, a similar structure may be employed also in relation to the seat portion 4. Alternatively, this structure may be employed for the seat portion 4 alone, with no application to the backrest portion 5.

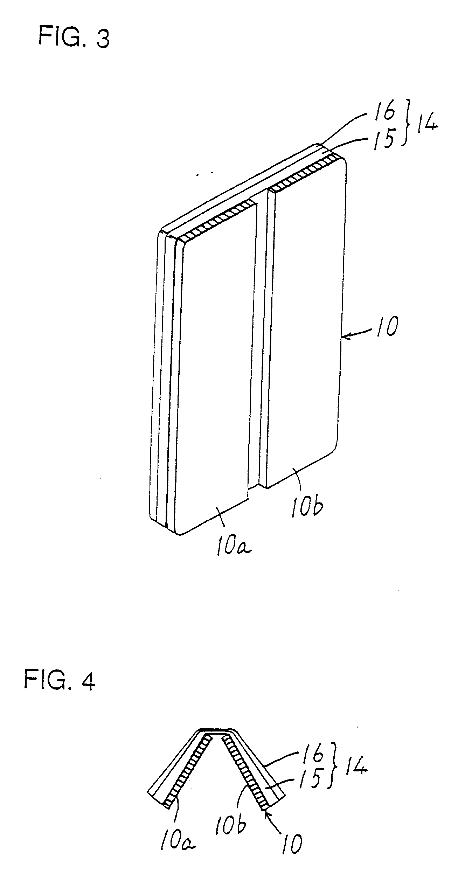

Figs. 3 and 4 are adapted to illustrate another embodiment of the present invention. Referring to Figs. 3 and 4, elements corresponding to those described above are denoted by similar reference numerals, to omit redundant description.

Figs. 3 and 4 show a padding member 10 which is advantageously employed in a cross-directionally collapsible seat. This padding member 10 is divided into two portions 10a and 10b which are cross-directionally arranged in parallel with each other. On the other hand, a cushion member 14 is so stuck on the padding member 10 as to integrally connect the two portions 10a and 10b thereof with each other.

According to this embodiment, it is possible to fold the cushion member 14 so that the portions 10a and 10b of the padding member 10 face each other, thereby allowing cross-directional collapse of the seat also when the padding member 10 is arranged over a wide cross-directional range of the cross-directionally collapsible seat. Although the padding member 10 is divided into the two portions 10a and 10b, it is possible to integrally handle these portions 10a and 10b, which are connected with each other by the cushion member 14.

While the padding member 10 is divided into two portions 10a and 10b in the embodiment shown in Figs. 3 and 4, the same may alternatively be divided into three or more portions.

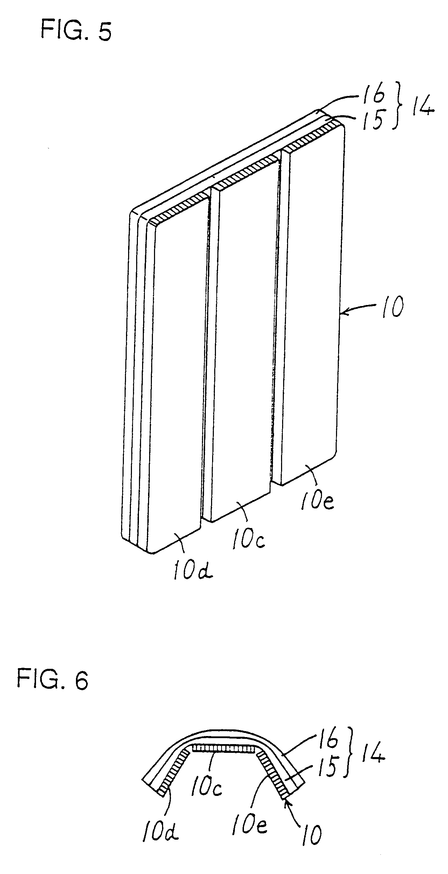

In an embodiment shown in Figs. 5 and 6, for example, a padding member 10 is divided into three portions. Figs. 5 and 6 are diagrams corresponding to Figs. 3 and 4 respectively, showing still another embodiment of the present invention. Referring to Figs. 5 and 6, elements corresponding to those described above are denoted by similar reference numerals, to omit redundant description.

Referring to Figs. 5 and 6, the padding member 10 is divided into a central portion 10c and side portions 10d and 10e provided on both sides thereof, which are cross-directionally arranged in parallel with each other, and a cushion member 14 is so stuck on the padding member 10 as to integrally connect the central portion 10c and the side portions 10d and 10e with each other.

Also according to this embodiment, it is possible to fold the cushion member 14 as shown in Fig. 6, as well as to handle the portions 10c, 10d and 10e integrally with each other. According to this embodiment, further, the central portion 10c is positioned along the backbone of the sitter, whereby it is possible to reliably prevent the region which is in contact with the backbone from formation of steps resulting from the connection between the portions 10c, 10d and 10e of the padding member 10. Thus, it is possible to bring the sitter into a more comfortable state with no unnatural deformation of the backbone of a baby, whereby a preferable backrest portion can be provided in view of the health of the baby.

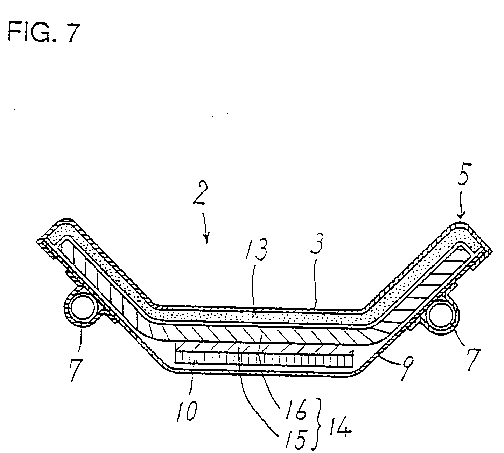

Fig. 7 is a cross sectional view showing a backrest portion 5 according to a further embodiment of the present invention. Referring to Fig. 7, elements corresponding to those shown in Figs. 1 and 2 are denoted by similar reference numerals, to omit redundant description.

Fig. 7 shows push rods 7 serving as rod members extending along back surfaces of both side portions of the backrest portion 5 respectively. While these push rods 7 have circular sections in Fig. 7 and those shown in Fig. 1 have square sections, this leads to no essential difference.

As shown in Fig. 7, a bag portion 9 which is provided on a flexible sheet member 3 has a larger width than that provided on the embodiment shown in Fig. 1. Further, a cushion member 14 is made to extend up to regions covering the push rods 7. In the cushion member 14 consisting of an inner side layer 15 and an outer side layer 16, particularly the outer side layer 16 is made to extend up to the regions covering the push rods 7, according to this embodiment.

When the cushion member 14 is so arranged as to extend up to the regions covering the push rods 7 as hereinabove described, it is possible to relieve an impact which is applied from either push rod 7 when the sitter collides with the same through the backrest portion 5.

While the present invention has been described with reference to the embodiments illustrated in the drawings, further modifications are also available within the scope of the present invention.

For example, the cushion member 14, which is structured to have at least two layers including the inner and outer side layers 15 and 16 in each of the aforementioned embodiments, may alternatively be simply formed by a single layer.

The instrument comprising a seat according to the present invention is applicable not only to the aforementioned baby carriage but any instrument such as a wheelchair, for example, so far as the same comprises a seat.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An instrument comprising a seat having a surface for receiving the sitter being formed by a flexible sheet member (3), said flexible sheet member being provided with a bag portion (9) for receiving a padding member (10) for providing said flexible sheet member with rigidity along the flexural direction,
a cushion member (14) being stuck on said padding member, said padding member being so inserted in said bag portion as to direct said cushion member toward the sitter.

2. The instrument comprising a seat in accordance with claim 1, wherein said seat includes a seat portion and a backrest portion being formed by said flexible sheet member, said padding member being arranged on at least one of said seat portion and said backrest portion.

3. The instrument comprising a seat in accordance with claim 1, wherein said seat is cross-directionally collapsible and said padding member is divided into a plurality of portions being cross-directionally arranged in parallel with each other, said cushion member being so stuck as to integrally connect said plurality of portions of said padding member with each other.

4. The instrument comprising a seat in accordance with claim 1, wherein said seat is cross-directionally collapsible and comprises a backrest portion being formed by said flexible sheet, and said padding member is divided into at least three portions including a central portion and side portions provided on both sides thereof being cross-directionally arranged in parallel with each other, said cushion member being so stuck as to integrally connect all said portions of said padding member with each other.

5. The instrument comprising a seat in accordance with claim 2, wherein said instrument comprising a seat is a baby carriage.

6. The instrument comprising a seat in accordance with claim 5, wherein said baby carriage comprises rod members extending along back surfaces of both side portions of said backrest portion respectively, said cushion member extending up to regions covering said rod members.

7. The instrument comprising a seat in accordance with claims 1, wherein said cushion member is structured by at least two layers including an inner side layer being in contact with said padding member and an outer side layer forming an outer surface, said inner side layer having a larger elastic coefficient than said outer side layer.

8. A seat (2) having flexible support means (3) for supporting a body in a sitting position and including a bag portion (9) receiving a removable and reinsertable insert for providing flexural rigidity, said insert comprising cushion means (14) attached to stiffening means (10).

9. A seat (2) as claimed in claim 8, wherein said stiffening means (10) comprises a plurality of stiffening members (10a-e) and said cushion means (14) is permanently attached to said members (10a-e) so as to interconnect them, such that said seat (2) is collapsible.

10. A seat (2) as claimed in claim 8, wherein said insert is disposed at a backrest portion (5) of said flexible support means (3) and said cushion means (14) is attached to said stiffening means so as to extend therebeyond for providing cushioning at side regions of said backrest portion (5).
